# EUROPÄISCHE PATENTSCHRIFT

(11) **EP 1 532 377 B1**
(45) Veröffentlichungstag und Bekanntmachung des Hinweises auf die Patenterteilung: **24.09.2008**
(21) Anmeldenummer: 03790537.9
(22) Anmeldetag: 26.08.2003
(51) Int. Cl.: F16C 33/08, F16C 17/02

(54) **GLEITLAGERSCHALE**
SLIDE BEARING SHELL
COQUILLE DE COUSSINET LISSE

(30) Priorität: 27.08.2002 AT 12772002
(43) Veröffentlichungstag der Anmeldung: 25.05.2005
(73) Patentinhaber: Miba Gleitlager GmbH, 4663 Laakirchen (AT)
(72) Erfinder: SCHRÜFER, Norbert, A-4663 Laakirchen (AT)
(74) Vertreter: Hübscher, Helmut
(86) Internationale Anmeldenummer: PCT/AT2003/000245
(87) Internationale Veröffentlichungsnummer: WO 2004/020853

(56) Entgegenhaltungen:
- DE-A- 2 943 711
- DE-A- 3 618 742
- US-A- 4 775 249
- US-A- 5 463 811

## Beschreibung

### Technisches Gebiet

Die Erfindung bezieht sich auf eine Gleitlagerschale mit wenigstens einem im Bereich einer Teilungsfläche vorgesehenen, über den Schalenrücken vorstehenden, durch einen sich nur über einen Teil der Schalendicke erstreckenden Verformungsabschnitt der Gleitlagerschale bildenden Haltenocken.

### Stand der Technik

Um Gleitlagerschalen einfach in entsprechenden Lagergehäusen positionieren zu können, werden die Gleitlagerschalen im Bereich ihrer Teilungsfläche mit wenigstens einem Haltenocken versehen, der über den Schalenrücken vorsteht und in eine in ihrer Form an den Haltenocken angepaßte Ausnehmung im Lagergehäuse eingreift. Zur Ausbildung solcher Haltenocken ist es bekannt (DE 3 230 700 C2), die Teilungsfläche der Gleitlagerschalen in einem radial äußeren und axial begrenzten Abschnitt so anzustauchen, daß der Schalenwerkstoff plastisch radial nach außen verdrängt wird. Dieser sich nur über einen Teil der Schalendicke erstreckende Verformungsabschnitt der Gleitlagerschale bildet einen Haltenocken mit dem Vorteil, daß die Lauffläche der Gleitlagerschalen durch die Ausformung des Haltenockens nicht beeinträchtigt wird. Nachteilig ist allerdings, daß zur Ausbildung ausreichend dimensionierter Haltenocken ein entsprechend großes Werkstoffvolumen verdrängt werden muß, was mit abnehmender Dicke der Gleitlagerschalen zunehmend Schwierigkeiten macht. Aus diesem Grunde werden bei dünnwandigen Gleitlagerschalen die Schalenwände im Bereich der vorzusehenden Haltenocken als Ganzes ausgebaucht (DE 196 31 663 C2), was mit dem Nachteil verbunden ist, daß im Bereich der ausgebauchten Verformungsabschnitte der tragende Laufflächenbereich unterbrochen wird.

Darstellung der Erfindung

Der Erfindung liegt somit die Aufgabe zugrunde, eine Gleitlagerschale der eingangs geschilderten Art so auszugestalten, daß mit einfachen Mitteln die Ausbildung ausreichend dimensionierter Haltenocken auch bei dünnwandigen Gleitlagerschalen sichergestellt werden kann.

Die Erfindung löst die gestellte Aufgabe dadurch, daß der Verformungsabschnitt aus einer Zunge besteht, die durch einen von der Teilungsfläche ausgehenden Einschnitt teilweise aus der Gleitlagerschale ausgeschnitten und ausgebogen ist.

Da zufolge dieser Maßnahmen der den Haltenocken bildende Verformungsabschnitt der Gleitlagerschale aus einer Zunge besteht, die durch einen vorzugsweise zur Teilungsfläche senkrechten, hinsichtlich der Gleitlagerschale axial ausgerichteten Einschnitt teilweise aus der Gleitlagerschale ausgeschnitten und ausgebogen wird, hängt der radiale Überstand des Haltenockens über den Schalenrükken einerseits von der Länge der Zunge und damit von der Tiefe des Einschnittes und anderseits vom Ausbiegewinkel, nicht aber von einer Werkstoffverdrängung ab, so daß auch bei vergleichsweise dünnen Gleitlagerschalen ausreichend über den Schalenrücken vorstehende Haltenocken möglich sind, ohne die Lauffläche im Bereich der Haltenocken zu beeinträchtigen. Dazu kommt, daß wegen des Einschneidens der Gleitlagerschale die für die Herstellung des Verformungsabschnittes aufzuwendenden Kräfte im Vergleich zu den sonst erforderlichen Stauchkräften klein gehalten werden können. Außerdem bleibt die Werkstoffverfestigung aufgrund einer Kaltverformung beschränkt, wodurch die Gefahr einer Rißbildung insbesondere im Bereich der Zungenwurzel, also im Übergangsbereich von der Zunge in den Schalenrücken, gering bleibt, so daß durch die erfindungsgemäße Ausbildung des Verformungsabschnittes als teilweise ausgeschnittene Zunge die Festigkeitseigenschaften der Gleitlagerschale im Bereich des Haltenockens nur vergleichsweise wenig beeinträchtigt werden.

Zum Herstellen solcher Gleitschalen mit einem Haltenocken aus einer aus der Schalenwand ausgebogenen Zunge kann die Zunge vorteilhaft durch einen von der Teilungsfläche ausgehenden Einschnitt der Gleitschale mit Hilfe eines keilförmigen Spaltwerkzeuges fortschreitend ausgeschnitten und aus der Gleitlagerschale ausgebogen werden, so daß für die Herstellung des Haltenockens lediglich ein Arbeitsgang erforderlich wird. Die Keilform des Spaltwerkzeuges bestimmt dabei in Abhängigkeit von der Einstichtiefe das Maß der Zungenausbiegung und damit die Form des Haltenockens.

Damit der Einschnitt zum teilweisen Ausschneiden der Zunge eine Verformung der Gleitlagerschale lediglich im Zungenbereich, nicht aber in anschließenden Bereichen bedingt, muß die Gleitlagerschale in üblicher Weise sowohl im Bereich der Lauffläche als auch im Bereich des Lagerrückens eingespannt werden. Die Abstützung im Bereich des Schalenrückens, wird nur im Zungenbereich unterbrochen, so daß die Zunge beim Einstechen des keilförmigen Spaltwerkzeuges in die im Zungenbereich vorgesehene Aussparung ausgebogen wird. Die am Schalenrücken anliegenden Aussparungsränder der jeweils vorgesehen Werkstückaufnahme können als mit dem Spaltwerkzeug zusammenwirkende Gegenmesser ausgebildet sein, so daß die im Zuge des fortschreitenden Ausschneidens und Ausbiegens der Zunge über den Schalenrücken vortretenden Bereiche der seitlichen Stirnflächen der Zunge durch diese Gegenmesser beschnitten werden, um eine genaue Erstreckung des Haltenockens bezüglich der Schalenachse ohne zusätzlichen Arbeitsschritt sicherstellen zu können.

### Kurze Beschreibung der Zeichnung

In der Zeichnung ist der Erfindungsgegenstand beispielsweise dargestellt. Es zeigen:
- Fig. 1: eine in eine Werkstückaufnahme eingesetzte Gleitlagerschale mit einem erfindungsgemäßen Haltenocken in einem schematischen Schnitt senkrecht zur Schalenachse,
- Fig. 2: die in die Werkstückaufnahme eingesetzte Lagerschale nach der Fig. 1 in einer Draufsicht,
- Fig.: 3 eine Seitenansicht der Werkstückaufnahme mit der eingesetzten Gleitlagerschale und
- Fig. 4: die Gleitlagerschale ausschnittsweise im Bereich des Haltenockens mit einem einstechenden Spaltwerkzeug in einem achsnormalen Schnitt in einem größeren Maßstab.

### Weg zur Ausführung der Erfindung

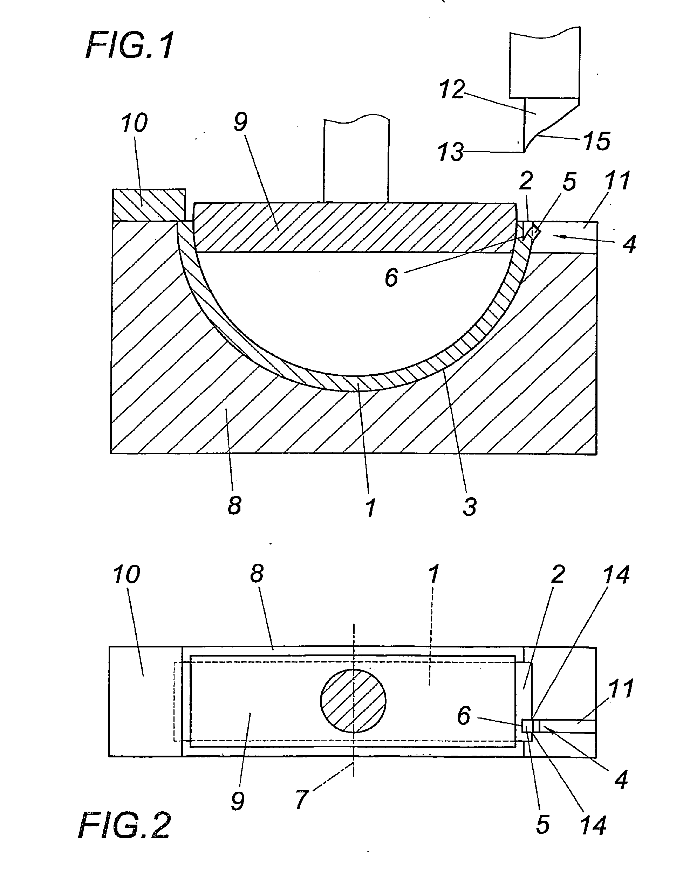

Wie insbesondere der Fig. 1 entnommen werden kann, weist die Gleitlagerschale 1 im Bereich ihrer Teilungsfläche 2 einen über den Schalenrücken 3 radial vorstehenden Haltenocken 4 auf, der durch eine Zunge 5 gebildet wird, die durch einen Einschnitt 6 teilweise aus der Gleitlagerschale 1 ausgeschnitten und ausgebogen ist. Der von der Teilungsfläche 2 ausgehende Einschnitt 6 verläuft gemäß der Fig. 1 im wesentlichen senkrecht zur Teilungsfläche 2 und gemäß der Fig. 2 parallel zur Schalenachse 7.

Zum Herstellen des Haltenockens 4 in Form einer teilweise aus der Gleitlagerschale 1 ausgeschnittenen und ausgebogenen Zunge 5 wird die Gleitlagerschale 1 in einer Werkstückaufnahme 8 eingespannt und zwar mit Hilfe eines Druckstempels 9, der die Gleitlagerschale 1 zumindest im Bereich der Teilungsfläche 2 an die Werkstückaufnahme 8 andrückt und damit im Bereich des auszubildenden Haltenockens 4 bearbeitungsgerecht einspannt. In Umfangsrichtung wird die Gleitlagerschale 1 über einen Anschlag 10 festgehalten.

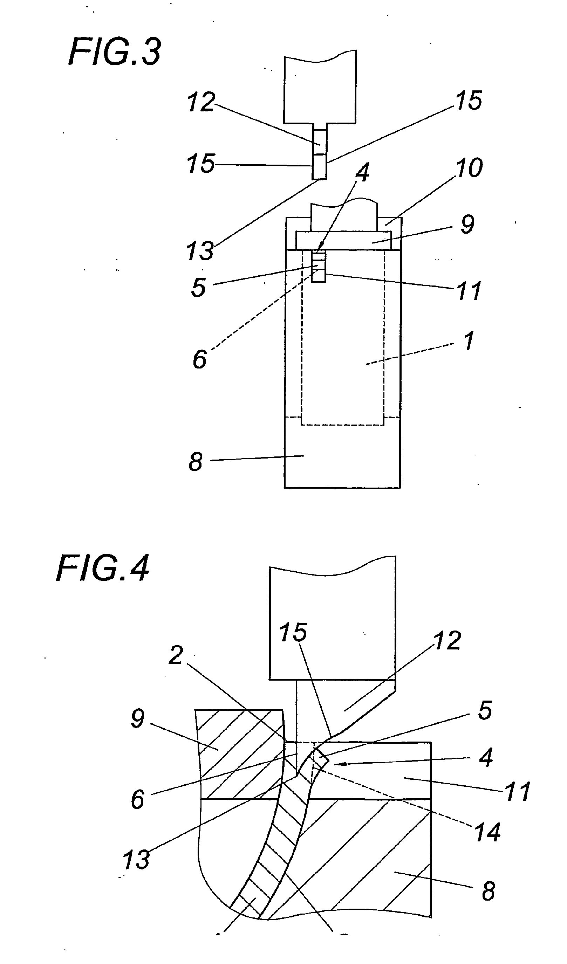

Im Bereich der auszubildenden Haltenocke 4 ist die Werkstückaufnahme mit einer an die Zungenbreite angepaßten Aussparung 11 versehen, um das Ausbiegen der herzustellenden Zunge 5 zu ermöglichen. Zum teilweisen Ausschneiden dieser Zunge 5 dient ein keilförmiges Spaltwerkzeug 12, dessen Schneide 13 der Breite der auszuschneidenden Zunge 5 entspricht. Aufgrund der Keilform des Spaltwerkzeuges 12 wird beim Einstechen des Spaltwerkzeuges 12 in die Teilungsfläche 2 die Zunge 5 fortschreitend aus der Gleitlagerschale 1 ausgeschnitten und gleichzeitig ausgebogen, wie dies in der Fig. 4 veranschaulicht ist. Da die am Schalenrücken 3 anliegenden Ränder der Aussparung 11 der Werkstückaufnahme 8 mit dem Spaltwerkzeug 12 zusammenwirkende Gegenmesser 14 bilden, werden zugleich mit dem Ausbiegen der Zunge 5 die über den Schalenrücken 3 vortretenden Bereiche der seitlichen Stirnflächen der Zunge 5 beschnitten, so daß die Zungenbreite in einem engen Toleranzbereich vorgegeben werden kann. In diesem Zusammenhang ist zu berücksichtigen, daß auch die von der Schneide 13 ausgehenden Seitenkanten 15 des Spaltwerkzeuges 12 Schneidkanten bilden, die das seitliche Abscheren der Zunge 5 unterstützen.

## Patentansprüche

1. Gleitlagerschale mit wenigstens einem im Bereich einer Teilungsfläche vorgesehenen, über den Schalenrücken vorstehenden, durch einen sich nur über einen Teil der Schalendicke erstreckenden Verformungsabschnitt der Gleitlagerschale bildenden Haltenocken, **dadurch gekennzeichnet, daß** der Verformungsabschnitt aus einer Zunge (5) besteht, die durch einen von der Teilungsfläche (2) ausgehenden Einschnitt (6) teilweise aus der Gleitlagerschale (1) ausgeschnitten und ausgebogen ist.

2. Verfahren zum Herstellen einer Gleitschale mit wenigstens einem im Bereich einer Teilungsfläche vorgesehenen, über den Schalenrücken vorstehenden Haltenocken, der durch eine sich nur über einen Teil der Schalendicke erstreckende Verformung der Gleitlagerschale gebildet wird, **dadurch gekennzeichnet, daß** durch einen von der Teilungsfläche ausgehenden Einschnitt der Gleitschale durch ein keilförmiges Spaltwerkzeug eine den Haltenocken bildende Zunge fortschreitend ausgeschnitten und aus der Gleitlagerschale ausgebogen wird.

3. Verfahren nach Anspruch 2, **dadurch gekennzeichnet, daß** die im Zuge des fortschreitenden Ausschneidens und Ausbiegens der Zunge über den Schalenrükken vortretenden Bereiche der seitlichen Stirnflächen der Zunge durch mit dem Spaltwerkzeug zusammenwirkende Gegenmesser beschnitten werden.

## Claims

1. Sliding bearing shell having at least one holding cam which is provided in the region of the dividing surface, protrudes over the back of the shell and forms [sic] by means of a deformation section of the sliding bearing shell which extends over only a part of the shell thickness, **characterised in that** the deformation section consists of a tongue (5) which is cut out and bent out partially from the sliding bearing shell (1) through a notch (6) issuing from the dividing surface (2).

2. Method for producing a sliding shell having at least one holding cam which is provided in the region of a dividing surface, protrudes over the back of the shell and is formed by means of a deformation of the sliding bearing shell which extends over only a part of the shell thickness, **characterised in that** through a notch in the sliding shell issuing from the dividing surface, a tongue which forms the holding cam is progressively cut out and is bent out of the sliding bearing shell by means of a wedge-shaped cleaving tool.

3. Method as claimed in claim 2, **characterised in that** the regions of the lateral end surfaces of the tongue which protrude over the back of the shell during the course of the progressive cutting and bending of the tongue are cut by means of counter blades which cooperate with the cleaving tool.

## Revendications

1. Coquille de palier à glissement, avec au moins un ergot de maintien, prévu dans la zone d'une surface de division, faisant saillie sur le dos de coquille, ergot de maintien se formant par un tronçon à déformation, s'étendant uniquement sur une partie de l'épaisseur de coquille, de la coquille de palier à glissement, **caractérisé en ce que** le tronçon à déformation est composé d'une languette (5), découpée partiellement à partir de la coquille de palier à glissement (1), par une entaille (6) partant de la surface de division (2), et pliée vers l'extérieur.

2. Procédé de fabrication d'une coquille de palier à glissement, avec au moins un ergot de maintien, prévu dans la zone d'une surface de division, faisant saillie sur le dos de coquille, ergot de maintien formé par une déformation, ne s'étendant que sur une partie de l'épaisseur de coquille, de la coquille de palier à glissement, **caractérisé en ce que**, par une entaille, partant de la surface de division, de la coquille de palier à glissement, en utilisant un outil de fendage cunéiforme, une languette, formant l'ergot de maintien, est progressivement découpée et pliée vers l'extérieur.

3. Procédé selon la revendication 2, **caractérisé en ce que** les zones, qui, au cours de la progression du découpage et du pliage vers l'extérieur de la languette, font saillie du dos de coquille, des faces frontales latérales de la languette, sont coupées au moyen de contre-lames, coopérant avec l'outil de fendage.
